# FASCICULE DE BREVET EUROPEEN

(11) **EP 2 770 035 B1**
(45) Date de publication et mention de la délivrance du brevet: **27.04.2016**
(21) Numéro de dépôt: 14156788.3
(22) Date de dépôt: 26.02.2014
(51) Int. Cl.: C09K 5/20, C23F 11/14

(54) **LIQUIDE DE REFROIDISSEMENT ANTIGEL À HAUT POUVOIR CALOPORTEUR**
FROSTSCHUTZ-KÜHLFLÜSSIGKEIT MIT HOHEM WÄRMEÜBERTRAGUNGSVERMÖGEN
ANTIFREEZE COOLANT WITH HIGH COOLING POWER

(30) Priorité: 26.02.2013 FR 1351696
(43) Date de publication de la demande: 27.08.2014
(73) Titulaire: BULL SAS, 78340 Les Clayes sous Bois (FR)
(72) Inventeur: Bonnin, Jean-Christophe, 78120 Rambouillet (FR)
(74) Mandataire: Camus, Olivier Jean-Claude

(56) Documents cités:
- EP-A1- 0 971 013
- EP-A1- 1 416 563
- CN-A- 101 319 134
- CN-A- 102 786 915

## Description

### DOMAINE TECHNIQUE DE L'INVENTION

L'invention se rapporte au refroidissement et plus particulièrement au refroidissement de composant électronique. Encore plus particulièrement, l'invention se rapporte au refroidissement par caloporteur liquide en circuit fermé sans changement de phase.

Encore plus particulièrement l'invention se rapporte au refroidissement de composant électroniques dans des milieux soumis à de fortes tensions et comportant des métaux spécifiques tels que l'or ou l'argent. Ces métaux sont cités de manière non limitatives.

On entendra par fortes tensions dans le cadre de la présente demande des tensions de l'ordre de la cinquantaine de volts. Sont en particulier visés les environnements des centres de calcul intensifs et plus généralement des grappes de serveurs et centres de calculs.

### ETAT DE LA TECHNIQUE ANTERIEURE

L'invention concerne un liquide de refroidissement de caractéristiques suivantes :
- solution aqueuse à haut pouvoir caloporteur
- ne gelant pas à -15 °C
- faible viscosité et faible masse volumique
- destiné à être utilisé sans changement de phase, dans un circuit fermé
- ne provoquant pas la corrosion des métaux suivants :
   - or,
   - argent
   - cuivre
   - acier
   - aluminium
   - inox
   - laiton
   - nickel
- ne dégradant pas les matières suivantes :
   - PTFE : Polytétrafluoroéthylène,
   - EPDM : éthylène-propylène-diène monomère,
   - NBR : butadiène-acrylonitrile,
   - PU : polyuréthane,
   - POM : Polyoxyméthylène.
- non dangereux pour l'être humain ni l'environnement

Il doit de plus ne pas provoquer de réaction dangereuse lorsqu'il est en contact prolongé, au moins 2 semaines, avec un conducteur recouvert d'un plaquage or ou argent et traversé par un courant électrique jusqu'à 54 volts.

Toutes ces caractéristiques rendent le liquide selon l'invention apte à être utilisé dans des environnements de centre de calcul, dans les calculateurs eux-mêmes via des circuits de refroidissement liquide fermés.

Dans l'état de la technique, tous domaines confondus, deux types de circuits de refroidissement fermés sont utilisés :
- avec changement de phase :
   - étanche à vie, sans compresseur, comme les caloducs : pas concerné par l'invention
   - démontable, avec compresseur, comme les climatisations et pompe à chaleur.
- sans changement de phase : une simple pompe suffit à acheminer le liquide et la chaleur qu'il transporte entre la source de chaleur et l'endroit où elle est dissipée, généralement par l'intermédiaire d'échangeurs de chaleur.

Trois familles de liquide antigel sont utilisées dans les circuits sans changement de phase :
- saumures (solution aqueuse de sels divers) : possèdent les caractéristiques requises mis à part la faculté de provoquer des réactions dangereuses lorsqu'elles sont en contact avec un courant forte tension de 54 volts ; après évaporation de l'eau, les sels sont conducteurs et provoquent des réactions exothermiques avec flammes et projections
- solutions non aqueuses : peuvent avoir toutes les propriétés requises, notamment en étant diélectrique et donc ne provoquant pas de réaction dangereuse au contact de la haute tension mais leur pouvoir calorifique est trop faible et le système de refroidissement doit être beaucoup plus imposant et moins économique
- solutions aqueuses de glycols et produits similaires :
   - MPG mono-propylène glycol: provoque une réaction exothermique dangereuse lorsqu'il est en contact avec un conducteur recouvert d'or ou d'argent et traversé par un courant forte tension : l'électrolyse du glycol provoque des flammes et il n'y a pas de surintensité et donc disjonction du circuit électrique ; le risque d'incendie est alors élevé ;
   - MEG : mono-éthylène glycol : dangereux pour l'être humain :
   - PEG : poly-éthylène glycol : se comporte comme le MPG :
   - glycérine ou glycérol : peu utilisée, se comporte comme le MPG :

CN102786915A divulgue une composition antigel consistant en 65 kg de Ucar 35 (mono-propylène glycol), 30 kg d'eau déionisé, 3 kg de benzotriazole, 1 kg de triéthanolamine et 1 kg de borax.

EP0971013A1 divulgue une composition caloporteur comprenant 47.5% poids de mono-propylène glycol, 50% poids d'eau déminéralisé et 2.5% poids d'un inhibiteur de corrosion, pour example benzotriazole.

CN101319134A divulgue une composition de refroidissement comprenant 78 kg de mono-propylène glycol, 10 kg de benzotriazole et 1 kg de benzoate de sodium.

EP1416563A1 divulgue des compositions caloporteurs comprenant au moins 35% de mono-propylène glycol, d'eau déionisé et 0.1% de benzotriazole ou 5-methyl-1H-benzotriazole. Ils ont une conductivité électrique au plus de 5 microSiemens/cm.

Pour résumer, plusieurs solutions non aqueuses existent mais aucune ne permet d'obtenir toutes les caractéristiques souhaitées. Globalement elles ont un pouvoir caloporteur faible et sont coûteuses. Le système de refroidissement de cartes électroniques, de composants électriques, ou de machines proches de courants électriques, est alors plus volumineux et plus onéreux.

La mise au point de ce type de liquide est longue. La validation des compatibilités avec les matériaux est fastidieuse.

### EXPOSE DE L'INVENTION

L'invention vise à remédier à tout ou partie des inconvénients de l'état de la technique identifiés ci-dessus, et notamment à proposer des moyens pour permettre de réaliser un liquide de refroidissement à forte capacité caloporteuse, électriquement neutre à de fortes tensions, non nocif pour les humains, l'environnement d'utilisation et l'environnement en général.

Dans ce dessein, un aspect de l'invention se rapporte à un liquide de refroidissement antigel à haut pouvoir caloporteur caractérisé en ce qu'il est composé de :
- Au moins 33% de mono-propylène glycol
- Au moins 2% d'un triazole,
- Au plus 1 % de biocides,
- Le complément à 100% d'eau.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles:
- Le liquide de refroidissement est composé de :
   - 40% de mono-propylène glycol,
   - 5% d'un triazole,
   - Au plus 1 % de biocides,
   - Le complément à 100% d'eau
- Le triazole est un benzotriazole,
- les biocides sont des ammoniums quaternaires,
- l'eau est de l'eau pure de faible conductivité,
- la conductivité de l'eau pure est inférieure ou égale à 15 MicroSiemens/cm,
- le benzotriazole fait office d'inhibiteur de corrosion.

### DESCRIPTION DETAILLEE D'UN MODE DE REALISATION

L'invention consiste en la réalisation d'un mélange des composants suivants dans des proportions en volume convenables :
- MPG : mono-propylène glycol
- BZT :benzotriazole,
- Biocides,
- Eau pure.

Le BZT est déjà présent dans des liquides de refroidissement inhibés contre la corrosion, car il est connu comme inhibiteur de la corrosion du cuivre, mais ce n'est pas uniquement cet aspect qui est concerné dans l'invention. Le BZT est également connu comme un retardateur de flammes mais ce n'est pas cet aspect qui est concerné.

Dans des proportions convenables de l'invention le BZT inhibe la réaction entre l'or ou l'argent du conducteur mouillé avec les produits issus de l'électrolyse de la solution aqueuse de MPG. Il n'est de plus pas dangereux pour l'environnement et est très stable. De plus, dans les proportions de l'invention le BZT inhibe la corrosion d'au moins le cuivre, de l'acier, de l'aluminium, de l'inox, du laiton et du nickel.

Bien que l'on trouve des liquides de refroidissement comportant du BZT, celui-ci y est dosé à environ 0,5 %. Ce dosage a été testé mais a entraîné une réaction dangereuse en présence d'une tension de 54 volts : déclenchement d'un incendie sans provoquer de surintensité et donc sans déclenchement de la protection du circuit d'alimentation électrique.

Les caractéristiques, liées au BZT, du liquide de refroidissement selon l'invention sont obtenues à partir de 2% de concentration de BZT.

Le dosage de 5 % de BZT permet de se passer d'autres inhibiteurs de corrosion car il inhibe la corrosion du cuivre, de l'acier, de l'aluminium, de l'inox, du laiton et du nickel, métaux majoritairement rencontrés dans les circuits de refroidissement en électronique et dans d'autres domaines.

Ce dosage de 5% n'est pas naturel. En effet il est supérieur au seuil de dilution du BZT dans de l'eau seul (2%). La présence de MPG, aux concentrations de l'invention, permet cette dilution à un taux élevé. Le produit final est stable et ne précipite pas. Cet effet est observé à partir de 33% de concentration de MPG. Un optimal, avec les autres caractéristiques recherchées est atteint pour 40% de concentration de MPG. Le MPG assure de plus une fonction d'antigel. L'utilisation d'un mélange MPG plus BZT, aux concentrations de l'invention, permet donc de supprimer les inconvénients connus et précités du MPG dans les milieux ou existent de fortes tensions.

L'utilisation d'eau pure permet d'abaisser la conductivité du liquide obtenu. De préférence on utilise une eau dont la conductivité électrique est d'au maximum 15 MicroSiemens/cm.

Le dosage des biocides est classique. Comme exemple on cite les biocides de la famille des ammoniums quaternaires. On en utilise un ou plusieurs. Il est entendu que l'on peut utiliser d'autres biocides.

De même que l'on a illustré l'invention avec un benzotriazole, on pourrait utiliser, à la place de celui-ci, l'un des triazoles des familles suivantes, la liste n'étant pas exhaustive :
- Un bi-triazole,
- Un amino-triazole, ou
- Le tolyltriazole.

Dans la famille des benzotriazoles on utilise l'un des suivants, la liste n'étant pas exhaustive :
- methyl-1 H-benzotriazole,
- dimethyl-1 H-benzotriazole,
- chloro-1 H-benzotriazole,
- carboxybenzotriazole,

## Revendications

1. Liquide de refroidissement antigel à haut pouvoir caloporteur, utilisable en milieux comportant de l'or ou de l'argent **caractérisé en ce qu'**il est composé de :
- 40% de mono-propylène glycol,
- 5% d'un triazole,
- Au plus 1% de biocides,
- Le complément à 100% d'eau.

2. Liquide selon l'une des revendications précédentes, **caractérisé en ce que** le triazole est un benzotriazole.

3. Liquide selon l'une des revendications précédentes, **caractérisé en ce que** les biocides sont des ammoniums quaternaires.

4. Liquide selon l'une des revendications précédentes, **caractérisé en ce que** le complément à 100% d'eau est réalisé avec de l'eau pure de faible conductivité.

5. Liquide selon la revendication 4, **caractérisé en ce que** la conductivité de l'eau pure est inférieure ou égale à 15 MicroSiemens/cm.

6. Liquide de refroidissement selon l'une des revendications précédentes, **caractérisé en ce que** le triazole fait office d'inhibiteur de corrosion.

## Patentansprüche

1. Frostschutz-Kühlflüssigkeit mit hohem Wärmeübertragungsvermögen, die in einer Gold oder Silber enthaltenden Umgebung verwendet werden kann, **dadurch gekennzeichnet, dass** die Kühlflüssigkeit zusammengesetzt ist aus:
- 40 % Monopropylenglykol,
- 5 % eines Triazols,
- höchstens 1 % Bioziden,
- zum Rest Wasser auf 100 %.

2. Flüssigkeit nach einem der vorhergehenden Ansprüche, **dadurch gekennzeichnet, dass** es sich bei dem Triazol um ein Benzotriazol handelt.

3. Flüssigkeit nach einem der vorhergehenden Ansprüche, **dadurch gekennzeichnet, dass** es sich bei den Bioziden um quaternäre Ammoniumverbindungen handelt.

4. Flüssigkeit nach einem der vorhergehenden Ansprüche, **dadurch gekennzeichnet, dass** für das Wasser als Rest auf 100 % ein Reinwasser mit geringer Leitfähigkeit verwendet wird.

5. Flüssigkeit nach Anspruch 4, **dadurch gekennzeichnet, dass** die Leitfähigkeit des Reinwassers 15 MicroSiemens/cm oder weniger beträgt.

6. Kühlflüssigkeit nach einem der vorhergehenden Ansprüche, **dadurch gekennzeichnet, dass** das Triazol als Korrosionsinhibitor dient.

## Claims

1. An antifreeze cooling liquid with high heat transfer power usable in environments in which there is gold or silver, **characterised in that** it is composed of:
- about 40% of monopropylene glycol,
- about 5% of a triazole,
- not more than about 1 % of biocides,
- the addition of water to make 100%.

2. The liquid according to claim 1, **characterised in that** the triazole is a benzotriazole.

3. The liquid according to one of the preceding claims, **characterised in that** the biocides are quaternary ammoniums.

4. The liquid according to one of the preceding claims, **characterised in that** the addition of water to make 100% is done with pure water with low conductivity.

5. The liquid according to claim 4, **characterised in that** the conductivity of the pure water is less than or equal to 15 MicroSiemens / cm.

6. A cooling liquid according to one of the preceding claims, **characterised in that** the triazole acts as a corrosion inhibitor.
